# EUROPÄISCHE PATENTANMELDUNG

(11) **EP 1 257 037 A1**
(43) Veröffentlichungstag der Anmeldung: **13.11.2002**
(21) Anmeldenummer: 02008802.7
(22) Anmeldetag: 19.04.2002
(51) Int. Cl.: H02K 1/20

(54) **Permanentmagneterregte elektrische Maschine**

(30) Priorität: 10.05.2001 AT 7452001
(71) Anmelder: Va Tech Elin EBG Motoren GmbH, 1141 Wien (AT)
(72) Erfinder: Mann, Christian, 1100 Wien (AT); Christandl, Günter, 8160 Weiz (AT)
(74) Vertreter: VA TECH Patente GmbH & Co

(57) **Zusammenfassung**

Die Kühlung permanentmagneterregter elektrischer Maschinen ist aufgrund der hohen Temperaturempfindlichkeit der Permanentmagnete besonders wichtig. Dabei sollte eine gleichmäßige Kühlung in allen Betriebspunkten und allen äußeren Bedingungen gewährleistet sein. Dies wird bei der vorliegenden Erfindung erreicht, indem eine direkt in die Blechpakete der elektrischen Maschine integrierte Flüssigkeitskühlung vorgesehen wird.

## Beschreibung

Die Erfindung betrifft eine permanentmagneterregte elektrische Maschine, bestehend aus einem Stator und einem Rotor, in Außenläuferausführung.

Da Permanentmagnete sehr temperaturempfindlich sind, ist es bei permanentmagneterregten elektrischen Maschinen besonders wichtig, eine entsprechende Kühlung vorzusehen, um die vorgegebenen Temperaturgrenzen für alle Betriebsfälle einzuhalten. Bei innenliegenden Rotor wird häufig ein außenliegender Wassermantel um den Stator zur Kühlung eingesetzt. Bei einem Außenläufer ist das nicht möglich, da durch die thermische Ausdehnung der Stator teilweise oder völlig vom Kühlmantel abheben würde, wodurch die Kühlwirkung zumindest eingeschränkt werden würde.

In der DE 196 36 591 A1 ist ein permanentmagneterregter Synchrongenerator in Außenläuferausführung für Windkraftanlagen offenbart, der eine spezielle Tragstruktur aufweist, sodass der Generator durch die vorbeiströmende Außenluft gekühlt wird. Die Kühlwirkung ist hierbei jedoch sehr stark von nicht beeinflussbaren Faktoren, wie beispielsweise Umgebungstemperatur, Strömungsgeschwindigkeit der Luft oder klimatischen Einflüssen, abhängig, wodurch keine konstante, gleichbleibende Kühlwirkung erzielt werden kann. Außerdem kann die Kühlwirkung natürlich nicht oder nur sehr eingeschränkt geregelt werden. Als Folge davon kann es zu Schwankungen der elektrischen Leistungen des Generators kommen.

Die vorliegende Erfindung hat sich deshalb die Aufgabe gestellt, eine permanentmagneterregte elektrische Maschine anzugeben, die eine konstante, gleichbleibende und regelbare Kühlung aufweist.

Die gestellte Aufgabe wurde erfindungsgemäß dadurch gelöst, dass die Kühlung der elektrischen Maschine als Flüssigkeitskühlung ausgeführt ist und in die Blechpakete der elektrischen Maschine integriert ist.
Damit erfolgt die Kühlung direkt in den verlusterzeugenden und somit thermisch hochbeanspruchten Teilen, nämlich die Eisenteile und die Wicklungen, wodurch die Kühlung besonders effektiv wirken kann. Weiters lässt sich eine Wasserkühlung sehr gut regeln, womit eine gleichbleibende Kühlwirkung und Temperatur der elektrischen Maschine in allen Betriebspunkten und unter allen äußeren Bedingungen gewährleistet werden kann.

Die Kühlung kann besonders einfach ausgeführt werden, wenn sie als Rohrsystem ausgeführt ist, das zumindest teilweise schlangenförmig radial und/oder axial durch die Blechpakete durchgeführt ist. Das Rohrsystem kann sehr flexibel ausgeführt werden, wodurch einfach ein optimaler Kühlflüssigkeitsumlauf erzielt werden kann.

Permanentmagneterregte elektrischen Maschinen in Außenläuferausführung lassen sich aufgrund der Bauweise besonders vorteilhaft als Synchrongenerator für Windkraftanlagen anwenden.

Konstruktive Vorteile ergeben sich, wenn die Blechpakete direkt auf die Tragstruktur der Windkraftanlage aufgeschichtet sind. Durch diese Kompaktbauweise kann Material eingespart und damit das Gewicht reduziert werden.

Wenn der Generator so ausgeführt ist, dass in seinem Inneren gegenüber der Außenwelt ein Überdruck herrscht, kann kein Gas, insbesondere Luft, das unter Umständen Feuchtigkeit und Salz enthalten kann, in den Generatorinnenraum eindringen. Dadurch kann ein wirkungsvoller Korrosionsschutz aller Teile des Generators sichergestellt werden.
Eine weitere Verbesserung des Korrosionsschutzes ergibt sich, wenn der Generatorinnenraum unter Atmosphärenüberdruck mit einem inerten Gas, beispielsweise Stickstoff, oder alternativ mit gereinigter und entfeuchteter Außenluft gefüllt ist.

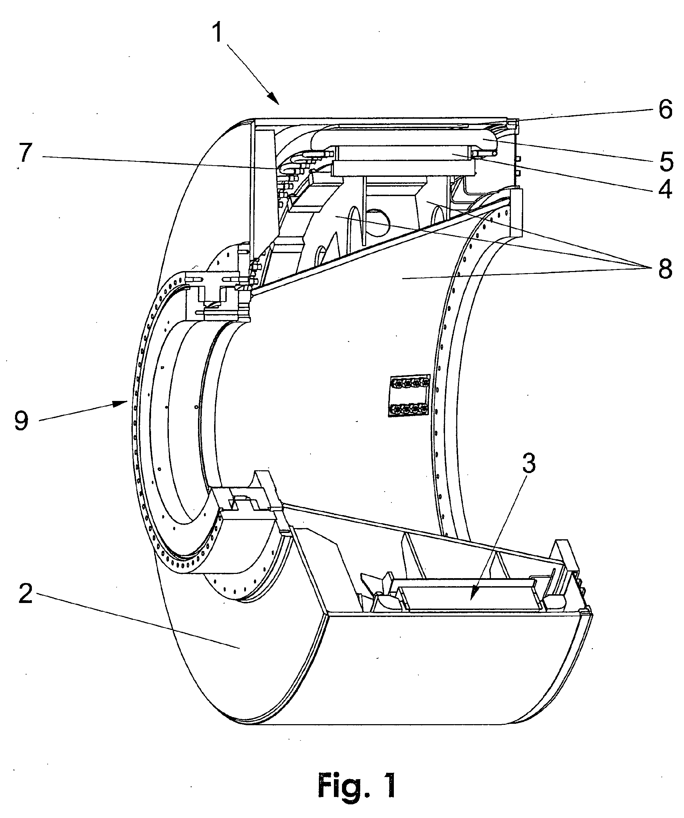

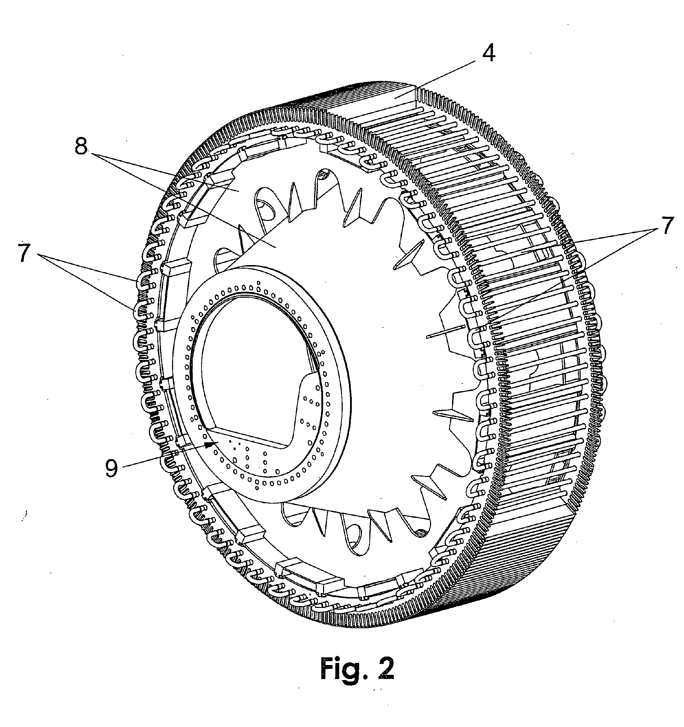

Die Erfindung wird anhand der beispielhaften und nicht einschränkenden Figuren 1 und 2 beschrieben. Dabei zeigt
- Fig. 1: eine dreidimensionale Ansicht eines Schnittes durch einen permanentmagneterregten Generator einer Windkraftanlage und
- Fig. 2: eine dreidimensionale Detailansicht einer erfindungsgemäßen Kühlung.

In Fig. 1 ist ein permanentmagneterregter Synchrongenerator 1 in Außenläuferausführung, also mit außenliegenden Rotor 2 dargestellt. Die Permanentmagnete 6 sind in diesem Beispiel am Rotor 2 angebracht, könnten aber natürlich auch am Stator 3 befestigt sein. Die Montage der Permanentmagnete 6 am Rotor 2 kann durch ein beliebiges geeignetes Verfahren, wie z.B. kleben oder schrauben, erfolgen. Der Stator 3 ist innenliegend und direkt mit der Tragstruktur 8 der Windkraftanlage verbunden. Die Blechpakete 4 des Stator 3 sind hier direkt auf der Tragstruktur 8 aufgeschichtet und tragen die Wicklungen 5. Durch die Blechpakete 4 ist ein Kühlrohr 7 schlangenförmig durchgeführt, wodurch die Kühlflüssigkeit direkt zu den thermisch am höchsten belasteten Teilen des Generators 1, nämlich den Eisenteilen und den Wicklungen 5, geführt wird.
Am Rotor 2 ist bei diesem Beispiel auch das nicht dargestellte Windrad angeflanscht, die beide von einem einzigen Lager 9 getragen werden. Natürlich sind hier auch beliebige andere konstruktive Lösungen, insbesondere mit zwei oder mehreren Lagern, oder mit einer durchgeführten Welle möglich.

In Fig. 2 ist das Kühlsystem detaillierter dargestellt. Das Kühlrohr 7 wird im Wesentlichen axial schlangenförmig durch die Blechpakete 4, die von der Tragstruktur 8 getragen werden, durchgeführt. Es ist natürlich auch eine beliebige andere Rohrführung möglich und denkbar. Insbesondere können die Rohre auch radial schlangenförmig oder in einer beliebigen Kombination durch die Blechpakete geführt werden.
Die Kühlflüssigkeit wird über eine nicht dargestellte Zuführung bereitgestellt, über eine ebenfalls nicht dargestellte Abführung wieder weggeleitet und über einen nicht dargestellten beliebigen Wärmetauscher wieder zur Kühlung rückgeführt. Um eine gleichmäßigere Kühlwirkung zu erzielen, können natürlich auch mehrere kleinere, von einander abgeschlossene Kühlsysteme vorgesehen werden, was zwangsweise natürlich auch mehrere Zuführungen und Abführungen bedingt.

## Patentansprüche

1. Permanentmagneterregte elektrische Maschine, bestehend aus einem Stator und einem Rotor, in Außenläuferausführung, **dadurch gekennzeichnet, dass** die Kühlung der elektrischen Maschine als Flüssigkeitskühlung ausgeführt ist und zumindest teilweise in die Blechpakete der elektrischen Maschine integriert ist.

2. Permanentmagneterregte elektrische Maschine nach Anspruch 1, **dadurch gekennzeichnet, dass** die Kühlung als Rohrsystem ausgeführt ist, das zumindest teilweise schlangenförmig radial und/oder axial durch die Blechpakete durchgeführt ist.

3. Verwendung der permanentmagneterregten elektrischen Maschine nach einem der Ansprüche 1 oder 2 als permanentmagneterregter Synchrongenerator, vorzugsweise für Windkraftanlagen.

4. Permanentmagneterregter Synchrongenerator nach Anspruch 3, **dadurch gekennzeichnet, dass** die Blechpakete direkt auf die Tragstruktur der Windkraftanlage aufgeschichtet sind.

5. Permanentmagneterregter Synchrongenerator nach Anspruch 3 oder 4, **dadurch gekennzeichnet, dass** der Generatorinnenraum gegenüber dem Atmosphärendruck der Außenwelt einen Überdruck aufweist.

6. Permanentmagneterregter Synchrongenerator nach Anspruch 5, **dadurch gekennzeichnet, dass** der Generatorinnenraum mit einem inerten Gas, beispielsweise Stickstoff, gefüllt ist.

7. Permanentmagneterregter Synchrongenerator nach Anspruch 5, **dadurch gekennzeichnet, dass** der Generatorinnenraum mit gereinigter und entfeuchteter Außenluft gefüllt ist.
